# EUROPEAN PATENT APPLICATION

(11) **EP 0 678 371 A1**
(43) Date of publication of application: **25.10.1995**
(21) Application number: 94106361.2
(22) Date of filing: 23.04.1994
(51) Int. Cl.: B29C 47/08

(54) **A system to fasten together the bodies of an extrusion head**

(71) Applicant: SIMPLAS S.p.A., I-21050 Bisuschio (VA) (IT)
(72) Inventor: Soffiantini, Fabio, c/o Simplas S.p.A., I-21050 Bisuschio (VA) (IT)
(74) Representative: Ferraiolo, Ruggero

(57) **Abstract**

Each of the bodies (1, 10) of an extrusion head comprises a cavity (6, 14) that defines a chamber (C) in C shape when said bodies are assembled in the fastening position; a thrust plate (11) that is C shaped is located in said chamber (C); the wings (8, 16 - 13, 12) of the C shapes of said chamber and said plate face the extrusion aperture (5); the surfaces (8a, 16a - 13a, 12a) of said wings facing the contact plane (A-A) between two of said bodies are tilted at the same angle (a) with said plane (A-A) and said tilted surfaces (13a, 12a) of said plate (11) slide on the corresponding tilted surfaces (8a, 16a) of said chamber (C) under pressure by means (15) suited to pushing said plate (11) towards aperture (5) so as to maintain said bodies (1, 10) thrust one against the other.

## Description

The present invention refers to a system to fasten together the bodies of a extrusion head for thermo-plastic laminates.

Most extrusion heads in use today consist of two bodies the joining of which forms spaces in which the plastic material is introduced under high pressures to be extruded through the appropriate aperture.

These spaces normally consist of a channel for the introduction of the plastic material located at the centre of the head, from the mouth of the latter two further channels open up in fan shape, forming an angle of about 160°, through which the plastic material is uniformly distributed throughout the head, and of the aperture that forms the actual mouth of the extrusion head, extended longitudinally from one end of the other of the head.

Some heads specially made for the production of may layers of sheets are fitted with may bodies among which the function described above is essentially repeated between each pair.

In order to obtain the perfect sealing off of the said spaces it is therefore necessary to strongly and uniformly hold these bodies together.

To this purpose a system is known that foresees the use of a large number of large stud screws, each passing through the upper body and fastening into a threaded hole in the lower body. Normally about 40 of said screws are used for each metre of length of a head.

During the fastening stage of said bodies said screws must be tightly screwed in, while in the opposite unfastening stage of said bodies they must be completely unscrewed and removed so as to be able to open the head, usually so as to allow the cleaning of residues of plastic material.

Said fastening and unfastening stages of the bodies of a head are therefore long and tiring, apart from requiring much strength ad accuracy in order to realize a perfect fastening of the bodies, that is to say sealed off.

In fact, it has been calculated that the overall unfastening and fastening operation of an extrusion head with this system requires about 6 hours work for a head about one metre long. Considering that during a normal work cycle it is necessary to often repeat these stages to open the head, clean it from residues of plastic material and close it again, the time required and the costs arising are very high. Moreover, the length of time taken for said stage to unfasten the bodies to open the head causes other problems linked to the cleaning of residues of plastic material, that are due to the characteristics of the working materials. In fact some of these tend to solidify in very short times and to adhere to the walls of said spaces formed by the bodies thus making the cleaning much more difficult.

There are other materials that, in cooling, emit toxic gases after a while, hence increasing the need to rapidly execute said stages of unfastening the bodies, opening the head and related cleaning.

The purpose of the system to which the present invention refers is that of obviating said disadvantages allowing rapid and effective fastening and unfastening of said bodies.

In the text of the description ad in the claims "longitudinal" is intended as a direction parallel to the long side of the head, and "transversal" as a direction normal to the longitudinal one.

Finally, we shall consider an extrusion head the bodies of which are positioned in such a way as to have the said aperture parallel to the ground and hence on a horizontal plane, intending "vertical" as a direction perpendicular to said horizontal plane.

According to the present invention the fastening system of the bodies of a extrusion head foresees a new way in which each of said bodies comprises at least one longitudinal cavity so as to define at least one longitudinal chamber sensibly shaped like a C when said bodies are assembled in the fastened position; that at least one thrust plate sensibly C shaped is located in each of said chambers; that the wings of the C shapes of said chambers and of said plates face the extrusion aperture of said head; that the surfaces of said wings facing the contact plane between two adjacents of said bodies are surfaces tilted at the same angle with said plane and that said tilted surfaces of said plates slide upon the corresponding above mentioned tilted surfaces of said chambers under the pressure of means suited to pushing said thrust plates towards said extrusion aperture so that the "wedge" effect exerted by said tilted surfaces will cause ad maintain the thrust of said bodies one against the other.

In order to better describe the system that is the subject of the present invention, purely as an example, we describe some preferred embodiments with reference to the drawings in which
Fig.s 1 and 2 are perspective views, and
Fig.s 3, 4, 5, 6 and 7 are cross sections.

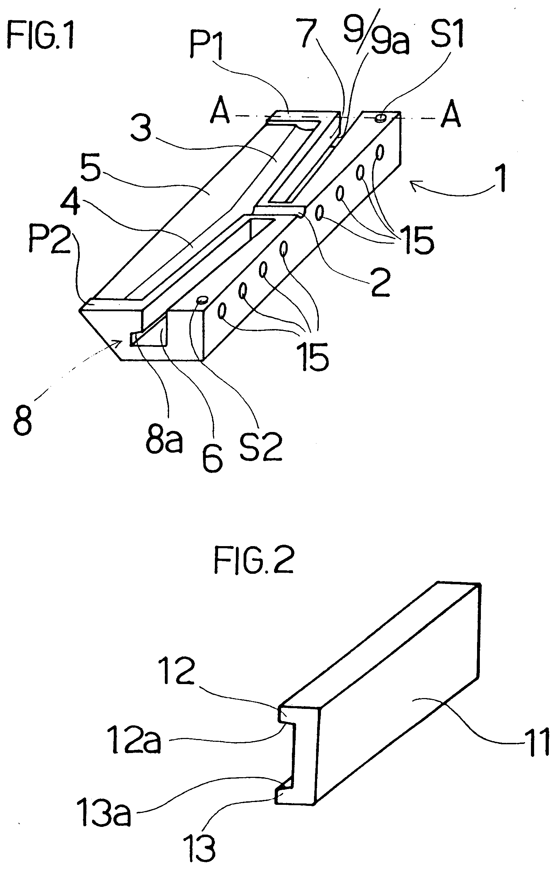

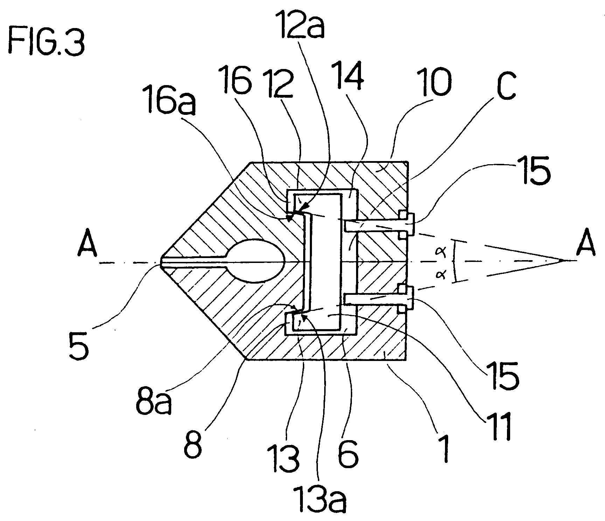

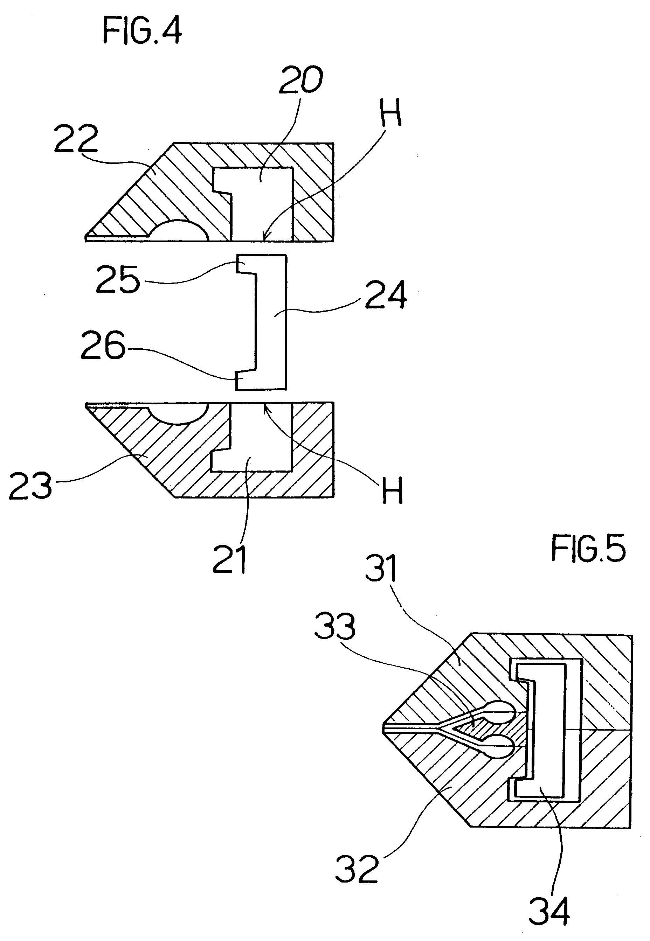

Figure 1 shows a lower steel body 1 of an extrusion head for PVC sheets of about two metres length (the corresponding upper body 10 is not illustrated and is specularly identical to the lower one, see 10 in Fig. 3 and 22 in Fig. 4.

Said body 1 features: the spaces for the passage of heated plastic material inclusive of the feeding channel 2, the distribution channels 3 and 4 and the extrusion aperture 5 laterally delimited by walls P1 and P2, the lathed cavities 6 and 7 with wings 8 and 9 that have back draft tilted surfaces 8a and 9a suited to realizing the fastening of said lower body 1 to the corresponding upper body 10 upon contact plane A-A.

Pins S1 and S2 are suited to connecting with corresponding holes made in the upper body 10 in order to assist in accurately positioning one body on the other.
Screws 15 (shown only in Fig.s 1 and 3 but present also on the heads illustrated in Fig.s 4, 5, 6 and 7) are the required means to thrust the thrust plates, similar to that shown in Fig. 2, transversally in the direction of said back draft tilted surfaces 8a and 9a so as to realize the forcible fastening of said bodies 1 and 10.

Fig. 2 shows the thrust plate 11 with a C shaped transversal section, featuring wings 12 and 13 the surfaces 12a and 13a of which are tilted.

In Fig. 3 bodies 1 and 10 are assembled for fastening, their lathed cavities 6 and 14 delimit a chamber C in which a thrust plate 11 is introduced. Surfaces 13 a and 12 a of said plate 11 and surfaces 8a and 16a of said chamber C form the same angle a equal to 10^{o} with said plane A-A.
By tightening screws 15, that are positioned in correspondence to each lathed cavity 6, 14, the transversal advancement of the thrust plates 11 is achieved in such a way that, by pressing said tilted surfaces 13a and 12a of said plate 11 against the corresponding tilted surfaces 8a and 16a of said chamber C, one obtains forces converging towards the contact plane A-A between bodies 1 and 10 and hence their forcible fastening together. To separate the two bodies 1 and 10, in order to clean the spaces (2-5 in Fig. 1) in which residues of plastic material remain, it will be enough to untighten screws 15 and extract each thrust plate 11. In order to more easily extract said thrust plates 11 suitable means may be applied at the inlet of said lathed cavities 6 and 14 for the separation of said wings 13 and 12 of said plate 11 from said wings 8 and 16 of said chamber C such as transverse dowel or a lever.

It has been calculated that a fastening system of the type described above allows the performance of the entire unfastening and re-fastening of an extrusion head in about ten minutes, and also shortens the time necessary to clean the same considering the state of the material, in this case the PVC, owing to the fact that in such a short time it does not solidify and adhere to the walls of said spaces, and is therefore easier to remove.

Moreover in this stage it does not yet emit toxic gases caused by its change of state. As an alternative to screws 15 one may apply similar through holes or other apertures through which other means suited to pushing said thrust plates may pass such as piston rods of hydraulic or pneumatic jacks, or, without using holes, said forcible fastening can be realized by causing the advancement of said thrust plates by introducing, beside each one and in the same longitudinal chamber, a second wedge shaped longitudinal element, having appropriately sloped the respective lathed cavities.

Fig. 4 shows a system similar to the previous one in which aperture H presented by each lathed cavity 20, 21 on the contact plane of bodies 22 and 23, is sufficiently wide as to allow the vertical introduction of a thrust plate 24. Especially, that is, said aperture H is wider than the thrust plate 24 also in correspondence to wings 25, 26.

Therefore to open and close said head less ample spaces are required than in the case of lateral introduction of each thrust plate.

In the case of very large heads thrust plates made up of many short elements arranged longitudinally may be used, either independently or linked up to one another, instead of using single very long plates.

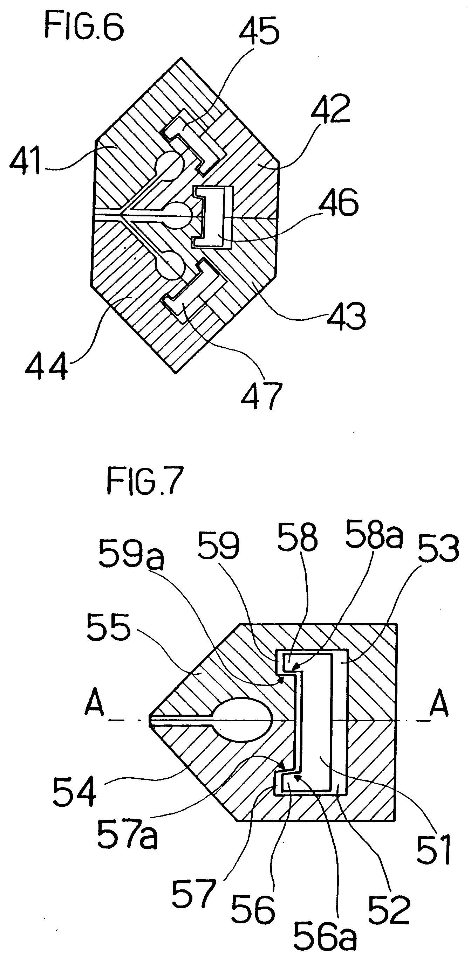

Fig. 5 shows a head consisting of three bodies in which the external bodies 31 and 32 and an intermediate body 33 are kept together by a single thrust plate 34 for each longitudinal half of the head.

Fig. 6 shows a "modular" head comprising four similar bodies 41, 42, 43 and 44 joined two by two by a pair of thrust plates 45, 46 and 47 for each longitudinal half of the head.

Fig. 7 shows a head in the bodies 54 and 55 of which lathed cavities 52 and 53 have been formed and into which thrust plate 51 is introduced.
While surface 57a of wing 57 of said lathed cavity 52 and surface 56a of the corresponding wing 56 of said plate 51 are tilted, surface 59a of wing 59 of said cavity 53 and corresponding surface 58a of wing 58 of said plate 51 are parallel to contact plane A-A between said bodies 54 and 55.

## Claims

1. A system to fasten together the bodies (1, 10 - 41, 42, 43, 44) of an extrusion head for thermo-plastic laminates **characterized** in that: each of said bodies (1, 10 - 41, 42, 43, 44) comprises at least one cavity (6, 14) that define at least one longitudinal chamber (C) sensibly in C shape when said bodies are assembled in a fastened position; that at least one thrust plate (11 - 45, 46, 47) sensibly C shaped is located in each of said chambers (C); that wings (8, 16 - 13, 12) of the C shapes of said chambers (C) and said plates (11 - 45, 46, 47) face the extrusion aperture (5) of said head; that surfaces (8a, 16a and 13a and 12a) of said wings (8, 16 - 13, 12) facing the contact plane (A-A) between two adjacents of said bodies are surfaces tilted at the same angle (a) to said plane (A-A) and that said tilted surfaces (13a and 12a) of said plates slide upon the said corresponding tilted surfaces (8a, 16a) of said chambers under pressure by means (15) suited to pushing said thrust plates (11 - 45, 46, 47) towards the extrusion aperture (5) in order that the "wedge" effect exerted by said tilted surfaces (8a, 16a - 13a, 12a) will cause and maintain the thrust of said bodies (1, 10) one against the other.

2. A system according to claim 1 **characterized** in that said means suited to pushing said thrust plates are a series of screws (15) passing through threaded holes made in both said bodies (1, 10 - 41, 42, 43, 44).

3. A system according to claim 1 **characterized** in that said means suited to pushing said thrust plates (11 - 45, 46, 47) are a series of levers hinged onto each body.

4. A system according to claim 1 **characterized** in that said means suited to pushing said thrust plates (11 - 45, 46, 47) are piston rods of hydraulic or pneumatic jacks.

5. A system according to claim 1 **characterized** in that said means suited to pushing said thrust plates (11 - 45, 46, 47) are elongated wedges that, being introduced into appropriately sloped areas of each chamber (C), behind each fastening element (11 - 45, 46, 47), determine a transversal thrust in the direction of the extrusion aperture (5) and hence forces their fastening.

6. A system according to each of the above claims **characterized** in that the surface (58a) of one of the wings (58) of said plates (51) and the surface (59a) of wing (59) of the corresponding cavity are parallel to said contact plane (A-A).

7. A system for fastening the bodies of a head according to each of the above claims comprising two main external bodies **characterized** in that it comprises one or more intermediate bodies (33) transversally shorter than said external bodies (31, 32) so as to not represent an obstacle to the introduction of each of said thrust plates (34), and that said wings of said C shapes are present only in said external bodies (31, 32) hence obtaining the forcible fastening according to one of the systems described in each of the previous claims directly on said external bodies (31, 32) and indirectly on said intermediate bodies (33).
